# EUROPÄISCHE PATENTSCHRIFT

(11) **EP 4 405 219 B1**
(45) Veröffentlichungstag und Bekanntmachung des Hinweises auf die Patenterteilung: **25.02.2026**
(21) Anmeldenummer: 22769985.7
(22) Anmeldetag: 31.08.2022
(51) Int. Cl.: B60T 8/88, B60T 17/22

(54) **VERFAHREN ZUM AUTOMATISCHEN DURCHFÜHREN EINES BREMSVORGANGS EINES FAHRZEUGS BEI EINEM FEHLERFALL EINER SPANNUNGSVERSORGUNG DES FAHRZEUGS, SOWIE ELEKTRONISCHES FAHRZEUGSICHERHEITSSYSTEM UND FAHRZEUG**
METHOD FOR AUTOMATICALLY CARRYING OUT A BRAKING PROCESS FOR A VEHICLE IN THE EVENT OF A FAULT IN A VOLTAGE SUPPLY OF THE VEHICLE, AND ELECTRONIC VEHICLE SAFETY SYSTEM AND VEHICLE
PROCÉDÉ DE RÉALISATION AUTOMATIQUE D'UN PROCESSUS DE FREINAGE POUR UN VÉHICULE EN CAS DE DÉFAILLANCE D'UNE ALIMENTATION EN TENSION DU VÉHICULE, ET SYSTÈME DE SÉCURITÉ ÉLECTRONIQUE DE VÉHICULE ET VÉHICULE

(30) Priorität: 20.09.2021 DE 102021210444
(43) Veröffentlichungstag der Anmeldung: 31.07.2024
(73) Patentinhaber: VOLKSWAGEN AKTIENGESELLSCHAFT, 38440 Wolfsburg (DE)
(72) Erfinder: BÄRECKE, Frank, 38444 Wolfsburg (DE); ALSTADT, Christian, 38106 Braunschweig (DE); SCHLIMME, Hauke Christian, 38100 Braunschweig (DE); BARTELS, Arne, 38448 Wolfsburg (DE)
(86) Internationale Anmeldenummer: PCT/EP2022/074160
(87) Internationale Veröffentlichungsnummer: WO 2023/041325

(56) Entgegenhaltungen:
- EP-A1- 3 616 974
- WO-A1-2019/068570
- DE-A1- 102019 206 501
- DE-A1- 4 436 372
- US-A1- 2019 168 724
- US-A1- 2020 231 065

## Beschreibung

Die Erfindung betrifft ein Verfahren zum automatischen Durchführen eines Bremsvorgans eines Fahrzeugs bei einem Fehlerfall einer Spannungsversorgung des Fahrzeugs, wobei ein Spannungswert der Spannungsversorgung des Fahrzeugs mittels einer Überwachungseinheit des Fahrzeugs überprüft wird. Mittels der Überwachungseinheit wird zumindest ein Fehlerfall der Spannungsversorgung festgestellt, indem der Spannungswert der Spannungsversorgung mit einem vorgegebenen Schwellwert verglichen wird, wobei dann, wenn der Fehlerfall festgestellt wird, eine Notfall-Spannung mittels einer zu der Spannungsversorgung des Fahrzeugs verschiedenen Notfall-Spannungsquelle einem Bremssystem zum Durchführen des Bremsvorgangs bereitgestellt wird.

Des Weiteren betrifft die Erfindung ein elektronisches Fahrzeugsicherheitssystem sowie ein Fahrzeug mit einem entsprechenden elektronischen Fahrzeugsicherheitssystem.

Beispielsweise weisen hochautomatisierte Fahrzeuge der aktuellen Fahrzeuggeneration eine elektronische Bremse beziehungsweise ein elektronisches Bremssystem, wie Brake-by-Wire-Systeme, auf. Bei solchen Bremssystemen sind die Betätigungs- und Stellenrichtungen voneinander mechanisch entkoppelt und dafür erfolgt die Entkopplung zwischen Betätigungseinrichtung und Bremse durch eine Signalübertragung. Durch die Betätigung des Bremspedals durch einen Nutzer des Fahrzeugs wird mittels einer Signalübertragung der vom Nutzer gewünschte Bremswunsch an die Bremsanlage übertragen, sodass ein Bremsvorgang durchgeführt wird.

Aufgrund der Tatsache, dass es zwischen dem Betätigungselement (Bremspedal) und den Stellgliedern der Bremse keine mechanische Verbindung und somit auch keine mechanische Rückfallebene vorhanden ist, ist bei solchen elektrischen Bremssystemen eine redundante Spannungsversorgung essentiell.

Bei einem Ausfall der Spannungsversorgung ist es daher notwendig, dass entsprechende Schutzmechanismen im Fahrzeug vorhanden sind, um einem Spannungsausfall entgegenwirken zu können.

Beispielsweise offenbart die EP 1 391 362 A1 ein elektronisches Steuergerät, dem Daten von anderen Steuergeräten und/oder Sensoren zuführbar sind, wobei dem elektronischen Steuergerät ein Speicherelement zugeordnet ist, in dem mindestens ein dem Steuergerät zugeordnetes Datum temporär zwischenspeicherbar ist, und in Abhängigkeit von den Daten eine Notlaufstrategie des Steuergeräts durchführbar ist.

Des Weiteren ist aus der DE 10 2007 042 481 A1 ein Fahrzeugsteuersystem für einen Kraftwagen bekannt. Mittels eines Fahrdatensensors können Fahrzustände des Kraftwagens erfasst werden. Des Weiteren weist das Fahrzeugsteuersystem einen Unfalldatenspeicher auf, der eingerichtet ist, zum gepufferten Aufzeichnen der Umfeldbilder und eine elektrische Steuerung zum Steuern des Fahrdatensensors, um beim Vorliegen von bestimmten Fahrdaten und/oder Umfeldbildern eine autonome Bremsung des Kraftwagens auszulösen.

Beispielsweise offenbart die DE 10 2009 033 366 A1 ein Steuergerät einer Bremsanlage eines Fahrzeuges, wobei das Fahrzeug ein Tragwerk und eine von dem Tragwerk getragene und wenigstens einen Fahrersitz aufweisende Kabine aufweist, wobei das Steuergerät außerhalb der Kabine an dem Tragwerk angeordnet ist, wobei das Steuergerät eine zusätzliche Funktionalität zur Steuerung eines elektronischen Luftfedersystems aufweist.

Ferner offenbart die US 2019 / 168 724 A1 ein Systeme zur Brems-Redundanz für ein autonomes Fahrzeug bereitgestellt. Eine autonome Fahrzeugbremsanlage kann ein primäres Bremsmodul umfassen, das einen oder mehrere Prozessoren umfasst. Das primäre Bremssteuermodul kann so konfiguriert werden, dass ein autonomes Fahrzeug als Reaktion auf den Erhalt eines Bremsbefehls aus einem Fahrzeugauto-System des autonomen Fahrzeugs bremst. Das autonome Fahrzeugbremssystem kann außerdem ein sekundäres Bremsmodul mit einem oder mehrere Prozessoren umfassen. Das sekundäre Bremssteuerungsmodul kann so konfiguriert werden, dass ein Ausfall des primären Bremsmoduls zum Bremsen des autonomen Fahrzeugs als Reaktion auf den Erhalt des Bremsbefehls ermittelt wird. Als Reaktion auf die Ermittlung des Ausfalls des primären Bremsmoduls zur Bremsung des autonomen Fahrzeugs kann das sekundäre Bremsmodul so konfiguriert werden, dass ein Bremsvorgang für das autonome Fahrzeug umgesetzt werden kann.

Eine Aufgabe der vorliegenden Erfindung besteht somit darin, dass bei einem Ausfall einer Spannungsversorgung eines Fahrzeugs das Fahrzeug effizient und sicher zum Stillstand gebracht werden kann.

Diese Aufgabe wird durch ein Verfahren, ein elektronisches Fahrzeugsicherheitssystem sowie ein Fahrzeug gemäß den unabhängigen Patentansprüchen gelöst. Sinnvolle Weiterbildungen ergeben sich aus den abhängigen Patentansprüchen.

Ein Aspekt der Erfindung betrifft ein Verfahren zum automatischen Durchführen eines Bremsvorgangs eines Fahrzeugs bei einem Fehlerfall einer Spannungsversorgung des Fahrzeugs, wobei
- ein Spannungswert der Spannungsversorgung des Fahrzeugs mittels einer Überwachungseinheit des Fahrzeugs überprüft wird,
- zumindest ein Fehlerfall der Spannungsversorgung mittels der Überwachungseinheit festgestellt wird, indem der Spannungswert der Spannungsversorgung mit einem vorgegebenen Schwellwert verglichen wird, wobei
- dann, wenn der Fehlerfall festgestellt wird, eine Notfall-Spannung mittels einer zu der Spannungsversorgung des Fahrzeugs verschiedenen Notfall-Spannungsquelle einem Bremssystem zum Durchführen des Bremsvorgangs bereitgestellt wird,
   dadurch gekennzeichnet, dass
- ein Steuereinrichtung zumindest einer Bremsanlage des Bremssystems in Abhängigkeit von der Notfall-Spannung betrieben wird, wobei
- durch die betriebene Steuereinrichtung ein Bremsdruck in der zumindest einen Bremsanlage erzeugt wird, wodurch der Bremsvorgangs des Fahrzeugs automatisch durchgeführt wird.

Durch das vorgeschlagene Verfahren kann das Fahrzeug trotz Auftretens eines Fehlerfalls beziehungsweise Fehlerbetriebs des Bremssystems und insbesondere in einem Fehlerfall der Spannungsversorgung des Fahrzeugs sicher abgebremst und somit zum Stillstand gebracht werden. Insbesondere kommt das vorgeschlagene Verfahren dann vorteilhaft zum Einsatz, wenn eine Störung und/oder ein Ausfall einer Spannungsversorgung des Bremssystems und/oder des Fahrzeugs vorliegen. Beispielsweise kann es der Fall sein, dass es zu einem Spannungsausfall innerhalb des fahrzeugseitigen elektrischen Bordnetzes kommt. Trotz dieses Ausfalls der Spannungsversorgung oder bei einer nicht ausreichenden Spannung kann erfindungsgemäß mittels der Notfall-Spannung der Notfall-Spannungsquelle ein Bremsvorgang beziehungsweise Verzögerungsvorgang des Fahrzeuges eingeleitet und insbesondere durchgeführt werden.

Mit anderen Worten ausgedrückt bietet das vorgeschlagene Verfahren die Möglichkeit einer Notfalleinrichtung beziehungsweise eines Sicherheitsmechanismus für den Fall, dass eine unzureichende oder gar keine Spannungsversorgung im Fahrzeug vorliegt. Dies ist besonders dann von Vorteil, wenn es sich bei dem Bremssystem um ein elektrisches Bremssystem wie ein Brake-by-Wire-Bremssystem handelt. Da ein solches Bremssystem eine elektrische Energie zu ihrer Funktionsfähigkeit benötigt, stellt die Notfall-Spannungsquelle eine redundante Sicherheitsfunktion bereit. Dies wird insbesondere dadurch erreicht, indem mittels der Notfall-Spannung eine Steuereinrichtung einer Bremsanlage mithilfe der Notfall-Spannung betrieben beziehungsweise angesteuert beziehungsweise aktiviert wird. Folglich kann trotz Ausfalls der Primärspannung des Fahrzeuges beziehungsweise der Primärspannungsversorgung ein sicherer Verzögerungsvorgang des Fahrzeuges durchgeführt werden.

Durch die mit der Notfall-Spannung betriebene Steuereinrichtung kann eine zusätzliche Möglichkeit bereitgestellt werden, um das Fahrzeug sicher zu verzögern beziehungsweise zu bremsen trotz des Ausfalls einer Energieversorgung, wie beispielsweise der Fahrzeugbatterie, des Fahrzeugs. Durch das vorgeschlagene Verfahren kann ein sicheres Anhalten des Fahrzeuges mit einem Brake-by-Wire-System als Bremssystem bei einem Ausfall oder einem Totalausfall die Spannungsversorgung durchgeführt werden. Da bei einem solchen Ausfall der Spannungsversorgung eine sinnvoll abgestufte Aufnahme eines Bremswunsches eines Fahrers des Fahrzeuges nicht mehr möglich ist, kann durch die betriebene Steuereinrichtung eine zusätzliche elektrische Energie zur Verfügung gestellt werden, um eine Bremswirkung zu erzeugen und aufrecht zu erhalten, die das Fahrzeug beispielsweise innerhalb einer kurzen Trajektorie sicher in den Stillstand verzögert. Des Weiteren ist bei Ausfall der Spannungsversorgung ein sicheres Anhalten wichtig, da neben einem Brake-by-Wire-System auch ein Steer-by-Wire-System im Fahrzeug vorhanden sein kann, welches von dem Ausfall der Spannungsversorgung ebenfalls betroffen sein könnte, sodass der Fahrer keine Lenkmöglichkeit mehr hat. Hier ist das sichere beziehungsweise automatische Bremsen des Fahrzeuges mithilfe der mit der Notfall-Spannung betriebenen Steuereinrichtung besonders vorteilhaft.

Beispielsweise kann es sich bei der Steuereinrichtung um eine elektrohydraulische Bremsbetätigungseinheit, ein Ventil, einen selbsthemmenden Kolben, ein Steuerventil oder ein Einlass- und/oder Auslassventil einer Bremse handeln.

Insbesondere ist die Steuereinrichtung derart ausgebildet, dass sie mit einer minimalen elektrischen Spannung beziehungsweise mit einem minimalen elektrischen Strom betrieben werden kann. Genau dies wird mithilfe der Notfall-Spannung zur Verfügung gestellt, dass auch trotz Ausfalls der Primärspannung des Fahrzeuges mithilfe der Notfall-Spannung eine ausreichende elektrische Energie zur Verfügung gestellt wird, mit welcher die Steuereinrichtung betrieben beziehungsweise gesteuert werden kann.

Beispielsweise kann es sich bei der Notfall-Spannungsquelle um eine gegenüber der Spannungsversorgung des Fahrzeugs unabhängige, körperlich getrennte Energiequelle handeln. Beispielsweise kann es sich bei der Notfall-Spannungsquelle um einen elektrischen Energiespeicher, einen elektrischen Generator, um einen Supercap, eine Kondensatorschaltung oder um eine Notfallbatterie handeln. Insbesondere ist die Notfall-Spannungsquelle derart im Fahrzeug integriert, dass sie unabhängig und in keiner Verbindung zu der Primärspannungsversorgung beziehungsweise Spannungsquelle des Fahrzeuges ist. Somit ist eine redundante Notfallversorgung bei einem Fehlerfall der Spannungsversorgung beziehungsweise die Primärspannungsversorgung des Fahrzeuges sichergestellt.

Insbesondere kann mithilfe der mit der Notfall-Spannung betriebenen Steuereinrichtung ein Bremsdruck in der zumindest einen Bremsanlage, insbesondere mehrerer Bremsanlagen, erzeugt beziehungsweise aufgebaut werden, wodurch der Bremsvorgang des Fahrzeuges automatisch durchgeführt beziehungsweise ausgelöst werden kann.

Insbesondere kann mithilfe des vorgeschlagenen Verfahrens eine elektrische Notbremsung bei einem Brake-by-Wire-System durchgeführt werden.

Beispielsweise kann es sich bei der Bremsanlage um eine elektromechanische Bremse, eine Betriebsbremsanlage, eine Druckluftbremse oder eine hydraulische Bremse handeln.

Mithilfe der Überwachungseinheit des Bremssystems oder des Fahrzeuges kann die Spannungsversorgung des Fahrzeuges oder des Bremssystems kontinuierlich überprüft beziehungsweise überwacht beziehungsweise erfasst werden. Beispielsweise kann die Überwachungseinheit zumindest ein Spannungsmessgerät oder ein alternatives elektrisches Messgerät aufweisen. Hierzu kann des Weiteren die Überwachungseinheit, welche insbesondere als elektronische Überwachungseinheit ausgebildet ist, das Spannungslevel beziehungsweise den Spannungswert der Versorgungsspannung derart überwachen, indem mit einer elektronischen Auswerteeinheit beziehungsweise Recheneinheit der erfasste Spannungswert der Spannungsversorgung mit dem vorgegebenen Schwellwert beziehungsweise Grenzwert verglichen wird. Wenn dabei festgestellt wird, dass der Spannungswert gleich oder kleiner dem vorgegebenen Schwellwert ist, so kann darauf geschlossen werden, dass ein Fehlerfall beziehungsweise ein Fehlerbetrieb vorliegt. In diesem Fall wird unverzüglich, insbesondere schnellstmöglich, die zumindest eine Steuereinrichtung mithilfe der Notfall-Spannung betrieben. Insbesondere wird beim Feststellen des Fehlerfalls die Notfall-Spannungsquelle aktiviert und insbesondere mit dem Bremssystem elektrisch verbunden beziehungsweise gekoppelt. Beispielsweise kann mithilfe der Überwachungseinheit ein entsprechendes Signal an die Notfall-Spannungsquelle, einer Schalteinrichtung und insbesondere an die Steuereinrichtung gesendet beziehungsweise übertragen werden.

Die Steuereinrichtung ist insbesondere in einem Bereich der Bremsanlage des Bremssystems und/oder im Bremskreis integriert beziehungsweise angeordnet. Beispielsweise befindet sich die Spannungsversorgung in einem Normalbetrieb beziehungsweise Normalfall, wenn der Spannungswert der Spannungsversorgung beispielsweise einen Wert zwischen dem Intervall zwischen 9,8 Volt und 16 Volt beträgt. Dabei kann der Spannungswert im Normalbetrieb jeden beliebigen Zwischenwert innerhalb dieses Intervalls aufweisen. Speziell kann in diesem Beispiel als vorgegebener Schwellwert 9,8 Volt verwendet werden. Sollte also der Spannungswert kleiner als die 9,8 Volt sein, so kann der Fehlerfall detektiert werden. Ebenso denkbar ist, dass es hier noch eine Abstufung gibt, sodass beispielsweise in einem Bereich zwischen den 9,8 Volt und 6 Volt eine erste Gefahrenstufe definiert wird, mittels derer erste Maßnahmen eingeleitet werden können. Sollte der Spannungswert unter 6 Volt sinken, so kann in einer nachgeschalteten zweiten Gefahrenstufe die sofortige Durchführung eines Notbremsvorgangs mithilfe der Steuereinrichtung ausgelöst und durchgeführt werden.

Insbesondere sind die soeben genannten Spannungswerte als Beispiele zu verstehen, da sich die Spannungswerte je nach Fahrzeugtyp oder Bremssystem und/oder Bordnetzsystem unterscheiden können. Die jeweiligen Spannungswerte und Grenzwerte können an das jeweilige Fahrzeug, insbesondere an die jeweilige Betriebsspannung des Fahrzeuges, angepasst werden.

Insbesondere sind die angegebenen Spannungswerte unter Berücksichtigung von Toleranzen, wie Messtoleranzen, zu betrachten. Beispielsweise können die angegebenen Spannungswerte eine Toleranz von +/- 10 Prozent, insbesondere 5 Prozent, aufweisen.

In einem Ausführungsbeispiel ist vorgesehen, dass mit der betriebenen Steuereinrichtung ein Steuerventil der zumindest einen Bremsanlage gesteuert wird, wobei mit dem angesteuerten Steuerventil der Bremsdruck in der zumindest einen Bremsanlage aufgebaut wird. Somit kann trotz Ausfalls der Spannungsversorgung das Steuerventil der zumindest einen Bremsanlage weiterhin angesteuert beziehungsweise gesteuert werden. Dies ermöglicht die bereitgestellte Notfall-Spannung. Mit anderen Worten erfolgt mithilfe der Notfall-Spannung eine Steuerung beziehungsweise Ansteuerung von Ventilen beziehungsweise Bremsventilen der zumindest einen Bremsanlage. Beispielsweise kann es sich bei dem Steuerventil um ein Einlass- und Auslassventil der zumindest einen Bremsanlage handeln. Somit kann mithilfe der Steuereinrichtung das Steuerventil entsprechend bestromt werden.

Mit anderen Worten ausgedrückt kann mithilfe des Steuerventils der Bremsanlage ein Bremsdruck in der Bremsanlage mithilfe der Notfall-Spannung aufgebaut werden. Je nach Ausführung des Steuerventils und nach Bestromung beziehungsweise Steuerung des Steuerventils kann dieser aufgebaute Bremsdruck in der Bremsanlage beziehungsweise Radbremse eingesperrt werden, sodass eine Bremskraft auf ein Fahrzeugrad beziehungsweise einen Fahrzeugreifen einwirkt und somit das Fahrzeug gebremst werden kann.

Die Bremsanlage und insbesondere das Steuerventil können verschieden ausgestaltet sein. Beispielsweise kann die Bremsanlage so ausgelegt sein, dass kein Druckverlust vorliegt, solange keine Bestromung des Steuerventils vorliegt. Erst nach Bestromung des Steuerventils kann der Druck wieder aus der Bremsanlage beziehungsweise aus den Bremsleitungen der Bremsanlage entweichen. Dies wäre beispielsweise bei einer Bremsanlage mit selbsthemmendem Kolben durchführbar. Eine weitere Möglichkeit ist, dass der Bremsdruck in der Radbremse beziehungsweise der Bremsanlage eingesperrt wird, indem das Steuerventil stromlos ist oder das Steuerventil permanent mit Strom versorgt beziehungsweise bestromt wird.

In einem weiteren Ausführungsbeispiel der Erfindung ist vorgesehen, dass das Steuerventil in Abhängigkeit von einem Fahrzeugzustand und/oder einer Fahrbahneigenschaft und/oder einem Zustand der zumindest einen Bremsanlage gesteuert wird, insbesondere das Steuerventil derart gesteuert wird, dass eine adaptive Bremskraft zum Durchführen eines Bremsvorgangs bereitgestellt werden kann. Somit kann das Steuerventil so angesteuert werden, dass ein an die jeweilige vorherrschende Situation angepasster Bremsvorgang des Fahrzeuges durchgeführt werden kann. Durch die Berücksichtigung der verschiedensten Informationen für das Ansteuern des Steuerventils kann der Bremsdruck derart für die Bremsanlage aufgebaut werden, dass die Bremskraft so für das Bremsen des Fahrzeuges vorliegt, dass der Bremsvorgang an die jeweilige Situation beziehungsweise die jeweilige Fahrsituation des Fahrzeuges angepasst ist. Somit kann beispielsweise verhindert werden, dass es zu einer Überbremsung oder zu einer geringen Bremsung kommt. Somit kann der Bremsvorgang sicherer durchgeführt werden und insbesondere das Fahrzeug sicherer angehalten werden.

Beispielsweise kann mit dem Fahrzeugzustand ein Zustand des Bremssystems und/oder der Bremse und/oder der Fahrzeugreifen und/oder eines anderweitigen Steuersystems und/oder Komponente des Fahrzeugs verstanden werden. Bei der Fahrbahneigenschaft ist insbesondere eine aktuelle Eigenschaft der Oberfläche der Fahrbahn, auf welcher sich das Fahrzeug aktuell fortbewegt, wichtig, da bei glatten beziehungsweise rutschigen Oberflächen ein nicht zu starker Bremsvorgang durchgeführt werden kann, um ein Übersteuern des Fahrzeuges zu verhindern. Ebenso ist der Zustand der jeweiligen Bremsanlage beziehungsweise der Radbremsen entscheidend, sodass die Bremskraft optimal auf die Fahrzeugräder einwirken kann. Beispielsweise kann die Steuereinrichtung und/oder die Überwachungseinheit eine entsprechende elektronische Auswerteeinheit oder Recheneinheit aufweisen, die das jeweilige Maß beziehungsweise Verhältnis der Ansteuerung des Steuerventils in Abhängigkeit von den vielfältigsten Informationen ermittelt beziehungsweise berechnet.

Insbesondere kann eine Ermittlung einer angepassten Maximalverzögerung in Abhängigkeit von der zuletzt bekannten Fahrumgebung, der Fahrgeschwindigkeit und des Reibwerts durchgeführt werden.

Es ist vorgesehen, dass der zumindest eine Fehler nur dann vorliegt, wenn der Spannungswert der Spannungsversorgung kleiner als der vorgegebene Schwellwert ist, wobei zusätzlich eine Zeitdauer, wie lange der Spannungswert kleiner als der vorgegebene Schwellwert ist, ermittelt wird, wobei anhand der ermittelten Zeitdauer der Fehlerfall zu zumindest einer Fehlerfall-Kategorie von zumindest zwei verschiedenen Fehlerfall-Kategorien zugeordnet wird. Dabei kann der zumindest eine Fehlerfall zu zumindest einer Fehlerfall-Kategorie von zumindest zwei verschiedenen Fehlerfall-Kategorien oder zu mehreren zugeordnet beziehungsweise eingeteilt werden. Somit kann eine abgestufte und selektive Beurteilung beziehungsweise Bewertung des vorliegenden Fehlerfalls beziehungsweise eines Fehlerbetriebs durchgeführt werden. Dadurch kann beispielsweise verhindert werden, dass es nicht unabsichtlich zu einer Vollbremsung beziehungsweise Notbremsung kommen kann, obwohl dies nicht notwendig war. Das Ermitteln der Zeitdauer, wie lange der Spannungswert kleiner als der vorgegebene Schwellwert ist, ist beispielsweise dann von Bedeutung, wenn das elektrische Bordnetz und/oder die Spannungsversorgung des Fahrzeugs Schwankungen und/oder Spannungsspitzen aufweist. Da diese in sehr kleinen Zeitabständen auftreten können und auch nur für wenige Millisekunden oder Mikrosekunden beispielsweise auftreten, ist hier eine detailliertere Bewertung vorteilhaft. Somit können unnötige und gefährliche Bremsvorgänge ausgeschlossen werden, da es sich beispielsweise um eine kurzfristige Spannungsschwankung gehandelt hat. Sollte jedoch der Spannungswert eine vorgegebene Zeitdauer überschreiten, innerhalb welcher der Spannungswert kleiner als der vorgegebene Schwellwert ist, so kann beispielsweise die Fehlerfall-Kategorie dem Fehlerfall zugeordnet werden, welcher die höchste Priorität aufweist.

Je nachdem, welchen Spannungswert die Spannungsversorgung aufweist und wie lange dieser Spannungswert vorliegt, kann eine selektive Unterteilung des Fehlerfalls durchgeführt werden. Beispielsweise können in jeder Fehlerfall-Kategorie entsprechende Maßnahmen und/oder Vorkonfigurationen für das Fahrzeug und/oder für das Bremssystem vorgegeben sein. Somit können die entsprechenden Maßnahmen schneller durch die verschiedenen Kategorien bereitgestellt werden und somit auch ebenfalls schnellere entsprechende Maßnahmen eingeleitet und durchgeführt werden.

Beispielsweise kann durch die Einteilung des Fehlerfalls in verschiedene Fehlerfall-Kategorien eine Abstufung erfolgen. Beispielsweise kann je nachdem, welchen Verlauf der Spannungswert aufweist, verschiedene Grenzwerte und verschiedene Zeitdauern berücksichtigt werden.

In einem weiteren Ausführungsbeispiel ist vorgesehen, dass eine erste Fehlerfall-Kategorie der zumindest zwei verschiedenen Fehlerfall-Kategorien mit einem ersten Zeitintervall, welches mit der ermittelten Zeitdauer verglichen werden kann, charakterisiert wird, wobei in der ersten Fehlerfall-Kategorie des Fehlerfalls die Notfall-Spannungsquelle in einen Bereitschafts-Modus versetzt wird. In einer zweiten Fehlerfall-Kategorie der zumindest zwei verschiedenen Fehlerfall-Kategorien wird in einem zweiten Zeitintervall, welches mit der ermittelten Zeitdauer verglichen werden kann, charakterisiert, wobei in der zweiten Fehlerfall-Kategorie des Fehlerfalls die Notfall-Spannungsquelle die Steuereinrichtung automatisch mit der Notfall-Spannung elektrisch versorgt wird.

Durch die Einteilung des Fehlerfalls in verschiedene Fehlerfall-Kategorien kann zunächst eine abgestufte Beurteilung des vorliegenden Fehlerfalls durchgeführt werden, sodass insbesondere es zu keinen unnötigen Bremsvorgängen oder sogar zu einem unnötigen Notbremsvorgang kommt. Für eine Einteilung in die erste Fehlerfall-Kategorie oder in die zweite Fehlerfall-Kategorie oder eine weitere Fehlerfall-Kategorie der mehreren Fehlerfall-Kategorien kann die ermittelte Zeitdauer und insbesondere der ermittelte Spannungswert berücksichtigt beziehungsweise verwendet werden. Beispielsweise kann die ermittelte Zeitdauer einen sehr kleinen Zeitwert aufweisen, was beispielsweise dadurch hervorgerufen werden kann, wenn die Spannungsversorgung des Fahrzeugs kurzzeitige Spannungsspitzen und/oder Spannungsschwankungen aufweist. Dies kann beispielsweise mit der ersten Fehlerfall-Kategorie berücksichtigt werden. Somit erfolgt zunächst das Versetzen der Notfall-Spannungsquelle, insbesondere der Steuereinrichtung, in einen Bereitschafts-Modus. Dabei werden hier spezielle Maßnahmen vorbereitet, aber noch nicht final ausgelöst. Sollte der Spannungswert beispielsweise wieder größer werden, so kann der Bereitschafts-Modus wieder verlassen werden und wieder zum Normalbetrieb zurückgekehrt werden. Sollte jedoch der Spannungswert länger anhalten und insbesondere die ermittelte Zeitdauer den zweiten Zeitintervall erreichen, so kann davon ausgegangen werden, dass eine dauerhafte Störung der Spannungsversorgung und insbesondere ein Abfall der Spannungsversorgung vorliegt. In diesem Fall erfolgt das unverzügliche Auslösen und Durchführen des Bremsvorgangs mithilfe der Steuereinrichtung und der Notfall-Spannung. Insbesondere können weitere Abstufungen vorgenommen werden, sodass eine detaillierte und selektivere Beurteilung des vorliegenden Fehlerfalls erfolgen kann. Beispielsweise können mit den verschiedensten Fehlerfall-Kategorien bereits Voreinstellungen und/oder Vorkonfigurationen vorgenommen werden, sodass im Falle der Durchführung eines durchzuführenden Bremsvorgangs bereits Spannungswerte der benötigten Notfall-Spannung, eine benötigte Bremskraft, ein benötigter Bremsdruck und/oder eine benötigte Intensität des Bremsvorgangs vordefiniert und in den Systemen eingestellt ist. Somit kann ein schnellerer und präziserer Bremsvorgang im Notfall durchgeführt werden.

In einem weiteren Ausführungsbeispiel der Erfindung ist vorgesehen, dass in einem Normalbetrieb der Spannungsversorgung des Fahrzeugs das Bremssystem in Abhängigkeit von einer Gefahrenstufe eines durchzuführenden Bremsvorgangs zusätzlich mit der Notfall-Spannungsquelle unterstützt wird, um den durchzuführenden Bremsvorgang durchzuführen. Somit kann auch in einem Normalbetrieb und in einem Normalfall der Spannungsversorgung des Fahrzeuges ein verbesserter Bremsvorgang durchgeführt werden, da neben der Primärspannung zusätzlich die Notfall-Spannung für die Durchführung des Bremsvorgangs verwendet werden kann. Somit kann der Bremsvorgang effizienter durchgeführt werden, da zwei redundante Spannungsversorgungen zur Verfügung stehen und verwendet werden können. Insbesondere ist dies dann von Vorteil, wenn ein Notbremsvorgang des Fahrzeuges durchgeführt werden muss. Somit kann mehr Energie zum Durchführen des Bremsvorgangs zur Verfügung gestellt werden, sodass der Bremsvorgang schneller und der Bremsweg kürzer erfolgen. Insbesondere wird dann die Notfall-Spannungsquelle zweckentfremdet, wenn eine gewisse Gefahrenstufe beziehungsweise eine Dringlichkeit beziehungsweise eine entsprechende Priorität des durchzuführenden Bremsvorgangs vorliegt. Dies kann beispielsweise mithilfe der elektronischen Auswerteeinheit und insbesondere mithilfe der Überwachungseinheit festgestellt und entschieden werden. Je nach Höhe der Dringlichkeit beziehungsweise Priorität der Gefahrenstufe bezüglich des Bremsvorgangs kann zumindest anteilig die Notfall-Spannung zur Verfügung gestellt werden. Im Falle einer Notbremsung kann vollumfänglich auf die Notfall-Spannungsquelle zurückgegriffen werden. Somit können kritische Bremsvorgänge besser und sicherer durchgeführt werden.

Beispielsweise ermöglicht dies eine Erweiterung einer Notbremseinrichtung des Fahrzeuges, um in Situationen, in denen plötzlich eine maximale Fahrzeugverzögerung notwendig ist, diese möglichst schnell bereitzustellen. Hierbei muss eine entsprechende Notbremseinrichtung, welche durch das vorgeschlagene Verfahren erreicht werden kann, eine adaptive Bremskraft bereitstellen. Die Rücknahme der zusätzlichen Bremskraft muss jederzeit im Fahrbetrieb möglich sei. Dies kann mit der Abschaltung oder zumindest teilweise Abschaltung der Notfall-Spannungsquelle erfolgen.

In einem Ausführungsbeispiel ist vorgesehen, dass durch den erzeugten Bremsdruck eine Notbremsung als Bremsvorgang durchgeführt wird, sodass das Fahrzeug zum Stillstand gebracht wird, insbesondere der Zustand des erreichten Stillstands des Fahrzeuges für eine vorgegebene Zeitdauer beibehalten wird. Das Durchführen einer Notbremsung beziehungsweise eines Nothaltevorgangs ist vor allem bei einem vollständigen Ausfall der Spannungsversorgung vorteilhaft, da in einem solchen Fall beispielsweise keinerlei Eingriffe durch den Fahrer, insbesondere bei Brake-by-Wire-Systemen oder Steer-by-Wire-Systemen, mehr getroffen werden können. Somit kann in Abhängigkeit von dem Zustand der Spannungsversorgung und/oder von einem Zustand des Fahrzeugs und/oder von einem Zustand des elektrischen Bordnetzes auf intelligente Art und Weise entschieden werden, ob ein Notbremsvorgang durchgeführt werden soll. Sollte ein kritischer Zustand des Fahrzeugs und/oder des Bremssystems vorliegen, so wäre eine Notbremsung vorteilhaft, da das Fahrzeug unverzüglich in einen sicheren Zustand, also zum Stillstand, gebracht beziehungsweise überführt werden kann.

Des Weiteren ist es von Vorteil, wenn der erreichte sichere Zustand beziehungsweise der erreichte Stillstand des Fahrzeugs für eine vorgegebene Zeitdauer beibehalten wird. Somit kann verhindert werden, dass nach dem Erreichen des Stillstands das Fahrzeug weiterrollt beziehungsweise weiterfährt. Somit bleibt das Fahrzeug so lange im Stillstand bis beispielsweise entsprechende Reparaturmaßnahmen durchgeführt wurden. Besonders vorteilhaft ist, wenn nach dem Erreichen des Stillstands das Fahrzeug dauerhaft gebremst wird. Dies kann beispielsweise so lange aufrechterhalten werden, bis das Fahrzeug beispielsweise abgeschleppt und in eine entsprechende Werkstatt gebracht wurde. Somit werden das Durchführen des Bremsvorgangs und die nachfolgende Zeit für den Nutzer des Fahrzeugs sicher gestaltet.

Besonders vorteilhaft ist, wenn im Anschluss der erfolgreich durchgeführten Bremsung die Betätigungskraft beziehungsweise die Bremskraft noch möglichst lange an den Bremsanlagen anliegt, damit ein einmal gesichertes Fahrzeug nicht plötzlich zu rollen beginnt. Somit kann eine Notverzögerung beziehungsweise eine Notbremsung auch nach dem Stillstand des Fahrzeugs sehr lange beziehungsweise unbegrenzt weiter aufrechterhalten werden.

In einem weiteren Ausführungsbeispiel ist vorgesehen, dass eine Information betreffend eines Zustands einer Fahrspur, auf welcher sich das Fahrzeug befindet, und/oder eine Information betreffend einer Umgebung des Fahrzeugs, und/oder eine Information betreffend einer aktuellen und/oder vergangenen Fahrsituation des Fahrzeugs einer elektronischen Auswerteeinheit der Überwachungseinheit bereitgestellt wird, wobei in Abhängigkeit von zumindest einer dieser bereitgestellten Informationen die Erzeugung des Bremsdrucks dynamisch angepasst wird, insbesondere anhand von zumindest einer dieser bereitgestellten Informationen ein Zeitpunkt der Erzeugung des Bremsdrucks und/oder eine Höhe beziehungsweise ein Maß beziehungsweise ein Wert des Bremsdrucks bestimmt wird.

Folglich kann ein an eine jeweilige Situation angepasster Bremsvorgang durchgeführt werden. Die verschiedensten Informationen können der Überwachungseinheit und insbesondere der elektronischen Auswerteeinheit beispielsweise über Fahrzeugsysteme oder externe Dienstinformationsquellen zur Verfügung gestellt werden. Ebenso können die Informationen durch Fahrzeugsysteme oder Fahrzeugerfassungssysteme erfasst und der Überwachungseinheit bereitgestellt werden. Diese Informationen können über kommunikationstechnische Verbindungen der Auswerteeinheit übermittelt werden und in einer Speichereinheit der elektronischen Auswerteeinheit gespeichert werden. Somit können beispielsweise im Falle eines Spannungsverlustes des Fahrzeugs die zuvor gespeicherten Informationen für die Durchführung des automatischen Bremsvorgangs abgerufen und somit berücksichtigt werden.

Bei der Information betreffend den Zustand der Fahrspur kann es sich beispielsweise um eine Oberflächenbeschaffenheit und/oder um einen Reibwert und/oder um einen Haftwert und/oder um einen Reibungskoeffizienten handeln. Bei der Information betreffend die Umgebung kann es sich um eine Umgebungsinformation, wie beispielsweise eine Verkehrssituation und/oder Objekte in der Umgebung des Fahrzeugs handeln. Bei der Information betreffend eine aktuelle oder vergangene Fahrsituation können beispielsweise die zurückgelegten Fahrmanöver oder Fahrsituationen des Fahrzeugs bereitgestellt und gespeichert werden. Insbesondere kann eine zurückgelegte beziehungsweise gefahrene Trajektorie analysiert und ebenso berücksichtigt werden. Beispielsweise können somit beim Durchfahren einer Kurve bei Auftreten des Spannungsverlustes und somit des Fehlerfalls die Kurvenlaufeigenschaften für das Durchführen des Bremsvorgangs berücksichtigt werden.

Beispielsweise kann die Erzeugung des Bremsdrucks derart erfolgen, dass eine Verzögerung beziehungsweise Bremsung des Fahrzeugs radseitig von etwa 30 % der Reibwertausnutzung bei maximalem Reibwert eingestellt werden kann, um ein Schleudern des Fahrzeugs zu verhindern. Beispielsweise können Reibwerteinschätzungen des Fahrzeugs zur Verfügung gestellt werden. Ebenfalls können Daten hierzu noch in einem Rückfallsystem des Fahrzeugs oder in dem Bremssystem gespeichert beziehungsweise in diesen zur Verfügung stehen. Dies ist insbesondere dann von Vorteil, wenn beispielsweise eine besonders glatte Fahrbahn vorliegt, sodass in diesem Fall die Bremskraft angepasst an diese glatte Situation eingestellt werden kann. Sollte ein hoher Reibwert zur Verfügung stehen, so kann eine deutlich höhere Bremskraft für den Bremsvorgang verwendet werden. Ebenso kann die Anpassung des Bremsvorgangs beziehungsweise das Verzögern in Abhängigkeit von der Topographie oder der letzten Fahrsituation durchgeführt werden. Beispielsweise kann auf stark abschüssigen Straßen eine höhere Verzögerung angestrebt werden als beispielsweise in Städten mit Fußgängern oder in kurvigen Bereichen. Ebenso sollte eine stärkere Verzögerung in Städten und in besonders verkehrsreichen Städten durchgeführt werden, um Verkehrssituationen entschärfen zu können.

Ein weiterer Aspekt der Erfindung betrifft ein elektronisches Fahrzeugsicherheitssystem mit einer Überwachungseinheit und zumindest einer Notfall-Spannungsquelle, wobei das elektronische Fahrzeugsicherheitssystem zum Durchführen eines Verfahrens nach einem der vorhergehenden Aspekte oder einer vorteilhaften Weiterbildung davon ausgebildet ist. Insbesondere wird das vorhin geschilderte Verfahren oder eine vorteilhafte Weiterbildung des vorhin geschilderten Verfahrens mithilfe des elektronischen Fahrzeugsicherheitssystems durchgeführt beziehungsweise ausgeführt.

Beispielsweise kann das elektronische Fahrzeugsicherheitssystem Bestandteil des Fahrzeugs oder des Bremssystems sein. Insbesondere kann das elektronische Fahrzeugsicherheitssystem ein vom Bremssystem unabhängiges, körperlich getrenntes System sein, sodass in dem Fehlerfall der Spannungsversorgung und/oder des Bremssystems des Fahrzeuges das elektronische Fahrzeugsicherheitssystem die entsprechenden Vorkehrungen treffen kann, um das Fahrzeug trotz des Fehlerfalls sicher zum Stillstand bringen zu können. Beispielsweise kann das elektronische Fahrzeugsicherheitssystem aus einer Einheit bestehen. Ebenso denkbar ist, dass das elektronische Fahrzeugsicherheitssystem aus mehreren einzelnen Komponenten besteht. Insbesondere kann das elektronische Fahrzeugsicherheitssystem als Notbremseinrichtung bezeichnet werden.

Beispielsweise kann das elektronische Fahrzeugsicherheitssystem eine Kontrolleinheit und einen Aktor aufweisen, welche mithilfe der Notfall-Spannungsquelle elektrisch versorgt werden können. Folglich wird eine elektrische Notenergie zur Verfügung gestellt. Mithilfe der Kontrolleinheit und des Aktors kann das Fahrzeug sicher zum Stillstand verzögert beziehungsweise gebremst werden. Beispielsweise kann es sich bei der Kontrolleinheit um die Steuereinrichtung handeln. Bei dem Aktor kann es sich um die Bremsanlage handeln.

Mithilfe des elektronischen Fahrzeugsicherheitssystems kann eine energieminimale Notbremsung ausgelöst werden, indem die Kontrolleinheit und der Aktor entsprechend angesteuert werden.

Zusätzlich oder anstatt kann das elektronische Fahrzeugsicherheitssystem die Notfall-Spannung an eine Parkbremsbetätigungseinrichtung des Fahrzeuges bereitstellen, um einen entsprechenden Bremsvorgang durchzuführen. Dabei kann beispielsweise mithilfe der Steuereinrichtung ein konstantes Verzögerungsmoment mithilfe der Parkbremse des Fahrzeuges eingestellt werden. Dies wäre ein zusätzlicher beziehungsweise optionaler Vorgang zum Durchführen des Bremsvorgangs des Fahrzeuges.

Des Weiteren kann das elektronische Fahrzeugsicherheitssystem die Notfall-Spannung an eine elektromechanische Bremse des Fahrzeuges bereitstellen. Dabei kann ebenso ein konstantes Verzögerungsmoment mit der elektronischen Bremse eingestellt werden, um das Fahrzeug sicher zum Stillstand zu bewegen.

Besonders vorteilhaft ist das elektronische Fahrzeugsicherheitssystem bei Fahrzeugen mit Brake-by-Wire-Systemen.

Ein weiterer Aspekt der Erfindung betrifft ein Fahrzeug mit einem elektronischen Fahrzeugsicherheitssystem nach einem der vorherigen Aspekte oder einer vorteilhaften Weiterbildung davon.

Beispielsweise kann es sich bei dem Fahrzeug um ein automatisiertes Fahrzeug handeln. Insbesondere kann es sich bei dem Fahrzeug um ein zumindest teilautonom betriebenes Fahrzeug handeln. Insbesondere weist das Fahrzeug ein Brake-by-Wire-System als Bremssystem auf.

Vorteilhafte Ausgestaltungsformen des Verfahrens sind als vorteilhafte Ausgestaltungsformen des elektronischen Fahrzeugsicherheitssystems und des Fahrzeugs anzusehen. Insbesondere können vorteilhafte Weiterbildungen eines Aspekts als vorteilhafte Weiterbildungen der anderen Aspekte und umgekehrt angesehen werden.

Eine Spannungsversorgung, insbesondere eine Fahrzeugbatterie, im Sinne der Erfindung umfasst zumindest eine und insbesondere mehrere elektrisch leitend miteinander verschaltete Batteriezellen, wobei eine solche Batteriezelle bevorzugt eine Spannung im Bereich von 3,5 und 4,0 Volt bereitstellt. Dabei kann eine solche Batteriezelle beispielsweise als eine prismatische Zelle, eine Pouchzelle oder eine Rundzelle ausgebildet sein. Die Spannungsversorgung ist bevorzugt als eine sogenannte Hochvolt-Batterie ausgestaltet, die dazu eingerichtet ist, eine elektrische Spannung im Bereich von mehr als 60 Volt, insbesondere im Bereich von mehreren 100 Volt, bereitzustellen. Eine solche Hochvolt-Batterie kann in einem Kraftfahrzeug angeordnet sein, wo sie einen elektrischen Verbraucher, insbesondere einen Antriebsmotor, mit elektrischer Energie versorgen kann.

Unter einer elektronischen Auswerteeinheit, insbesondere einer Recheneinheit, kann insbesondere ein Datenverarbeitungsgerät verstanden werden, die einen Verarbeitungsschaltkreis enthält. Die Auswerteeinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: _{"}look-up table"), durchzuführen. Die Auswerteeinheit kann insbesondere einen oder mehrere Computer, einen oder mehrere Mikrocontroller und/oder einen oder mehrere integrierte Schaltkreise enthalten.

Ein Umfeldsensorsystem zum Erfassen der Umgebung des Fahrzeugs kann hier und im Folgenden als Sensorsystem verstanden werden, das dazu in der Lage ist, Sensordaten oder Sensorsignale zu erzeugen, welche eine Umgebung des Fahrzeugs abbilden, darstellen oder wiedergeben. Insbesondere ist die Fähigkeit, elektromagnetische oder sonstige Signale aus der Umgebung zu erfassen, nicht hinreichend, um ein Sensorsystem als Umfeldsensorsystem zu erachten. Beispielsweise können Kameras, Radarsysteme, Lidarsysteme oder Ultraschallsensorsysteme als Umfeldsensorsysteme aufgefasst werden.

Zu der Erfindung gehören auch Weiterbildungen des erfindungsgemäßen elektronischen Fahrzeugsicherheitssystems und des erfindungsgemäßen Fahrzeugs die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen elektronischen Fahrzeugsicherheitssystems und des erfindungsgemäßen Fahrzeugs hier nicht noch einmal beschrieben.

Die Erfindung umfasst auch die Kombinationen der Merkmale der beschriebenen Ausführungsformen.

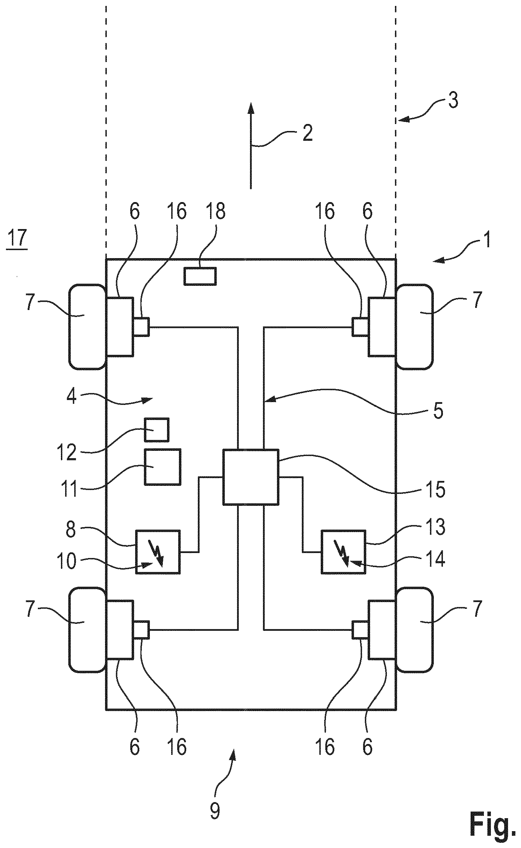

Im Folgenden werden Ausführungsbeispiele der Erfindung beschrieben. Hierzu zeigt die einzige Figur eine schematische Darstellung eines Fahrzeugs mit einem elektronischen Fahrzeugsicherheitssystem.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

Die Figur zeigt eine schematische Darstellung eines Fahrzeugs 1, welches beispielsweise eine Fortbewegungsfahrt 2 entlang einer Fahrspur 3 fährt. Somit befindet sich das Fahrzeug 1 während einer realen Fahrsituation beziehungsweise Verkehrssituation im Straßenverkehr. Beispielsweise kann das Fahrzeug 1 die Fortbewegungsfahrt 2 entlang einer Autobahn, einer Landstraße oder innerhalb eines urbanen Gebiets durchführen.

Bei dem Fahrzeug 1 kann es sich beispielsweise um ein hochautomatisiertes Fahrzeug handeln, welches verschiedenste Fahrerassistenzsysteme und/oder Fahrzeugführungssysteme aufweist. Insbesondere weist das Fahrzeug 1 ein Bremssystem 4 auf. Mithilfe des Bremssystems 4 kann das Fahrzeug 1 gebremst beziehungsweise verzögert werden. Hierzu weist das Bremssystem 4 einen Bremskreis 5 auf, mit welchem entsprechende Bremsanlagen 6 für einen Bremsvorgang angesteuert beziehungsweise gesteuert werden können. Insbesondere sind die Bremsanlagen 6 im Bereich der Fahrzeugreifen 7 beziehungsweise Fahrzeugräder angeordnet.

Beispielsweise kann es sich bei dem Bremssystem 4 um ein Brake-by-Wire-Bremssystem handeln. Ein solches Bremssystem benötigt eine effiziente Spannungsversorgung.

Beispielsweise kann das Bremssystem 4 eine eigene Spannungsversorgung oder eine gemeinsame Spannungsversorgung des Fahrzeugs 1 aufweisen. Beispielsweise kann das Fahrzeug 1 eine Spannungsversorgung 8 aufweisen. Diese Spannungsversorgung 8 kann beispielsweise Bestandteil der Fahrzeugbatterie des Fahrzeuges oder die Fahrzeugbatterie an sich sein. Ebenso kann es sich bei der Spannungsversorgung 8 um einen Bestandteil eines elektrischen Bordnetzes des Fahrzeuges 1 handeln. Mithilfe der Spannungsversorgung 8 können das Bremssystem 4 und weitere Systeme des Fahrzeuges 1 mit elektrischer Energie versorgt werden.

Für den Fall, dass die Spannungsversorgung 8 unzureichend ist oder gar vollständig ausgefallen ist, weist das Fahrzeug 1 erfindungsgemäß ein elektronisches Fahrzeugsicherheitssystem 9 auf. Mithilfe des elektronischen Fahrzeugsicherheitssystems 9 können entsprechende Maßnahmen getroffen werden, wenn die Spannungsversorgung 8 und/oder das Bremssystem 4 einen Fehlerfall beziehungsweise einen Fehlerbetrieb aufweist. Dies ist insbesondere dann der Fall, wenn die Spannungsversorgung 8 unzureichend ist. Dies kann zur Folge haben, dass ein Spannungswert 10 der Spannungsversorgung 8 einen vorgegebenen Schwellwert beziehungsweise Grenzwert unterschritten hat. Die Spannungsversorgung 8 kann kontinuierlich mittels einer Überwachungseinheit 11, insbesondere einer elektronischen Überwachungseinheit, überwacht werden. Die Überwachungseinheit 11 kann Bestandteil des Bremssystems 4 und/oder des elektronischen Fahrzeugsicherheitssystems 9 und/oder des Fahrzeugs 1 sein. Beispielsweise kann die Überwachungseinheit 11 eine übergeordnete Einheit des Fahrzeuges 1 oder des elektronischen Bordnetzes sein. Insbesondere weist die Überwachungseinheit 11 für die Überwachung der Spannungsversorgung 8 zumindest ein Spannungsmessgerät beziehungsweise eine Spannungsmesseinheit auf.

Mithilfe der Überwachungseinheit 11 kann somit fortlaufend der Spannungswert 10 der Spannungsversorgung 8 überprüft beziehungsweise ermittelt werden und mit dem vorgegebenen Schwellwert verglichen werden. Dieser Vergleich und insbesondere ein Auswerten davon können mithilfe einer elektronischen Auswerteeinheit 12 erfolgen.

Die elektronische Auswerteeinheit 12 kann Bestandteil der Überwachungseinheit 11 und insbesondere des elektronischen Fahrzeugsicherheitssystems 9 sein. Bei der elektronischen Auswerteeinheit 12 kann es sich beispielsweise um eine Recheneinheit handeln.

Mit der Überwachungseinheit 11 kann also festgestellt werden, insbesondere automatisch, wenn der Spannungswert 10 der Spannungsversorgung 8 den vorgegebenen Schwellwert unterschritten hat beziehungsweise unterschreitet. Somit kann der Fehlerfall der Spannungsversorgung 8 festgestellt werden. Anhand dieser Feststellung können beispielsweise automatisch entsprechende Sicherheitsmaßnahmen und/oder Sicherheitsfunktionen im Fahrzeug 1 aktiviert werden. Eine wichtige Maßnahme hierzu, um insbesondere eine ausreichende Spannung für das Bremssystem 4 bereitzustellen, ist das Bereitstellen einer Notfall-Spannungsquelle 13. Bei der Notfall-Spannungsquelle 13 handelt es sich um eine von gegenüber der Spannungsversorgung 8 körperlich getrennte, insbesondere unabhängige, elektrische Energiequelle des Fahrzeugs 1. Diese wird primär dann verwendet, wenn der soeben geschilderte Fehlerfall eintritt. Somit weist das Fahrzeug 1 mehrere redundante elektrische Energiequellen auf. Mithilfe der Notfall-Spannungsquelle 13 kann in dem Fehlerfall insbesondere eine Notfall-Spannung 14 für das Bremssystem 4 zur Verfügung gestellt werden. Somit kann bei Ausfall der Spannungsversorgung 8 das Bremssystem 4 mit der Notfall-Spannung 14 gespeist beziehungsweise elektrisch versorgt werden.

Mithilfe der bereitgestellten Notfall-Spannung 14 kann trotz Ausfalls der Spannungsversorgung 8 zumindest eine Steuereinrichtung 15 zumindest einer Bremsanlage 6 betrieben werden. Insbesondere kann bei Auftreten des Fehlerfalls die Steuereinrichtung 15 mithilfe der Notfall-Spannung 14 aktiviert werden. Insbesondere kann das Bremssystem 4 mehrere Steuereinrichtungen 15 aufweisen. Insbesondere kann für jede Bremsanlage 6 eine Steuereinrichtung 15 vorgesehen sein. In dem dargestellten Ausführungsbeispiel weist das Bremssystem 4 eine Steuereinrichtung 15 als zentrale Einheit auf. Mit anderen Worten ausgedrückt kann es sich bei der Steuereinrichtung 15 um eine Notbremseinrichtung handeln.

Mithilfe der Steuereinrichtung 15 können auch bei Ausfall der Spannungsversorgung 8 die Bremsanlagen 6 gesteuert und insbesondere betrieben werden, sodass in Abhängigkeit von der Steuereinrichtung 15 in der zumindest einen Bremsanlage 6 ein Bremsdruck erzeugt beziehungsweise aufgebaut werden kann, mit welchem die entsprechende Bremskraft auf die Fahrzeugreifen 7 einwirken kann, um das Fahrzeug 1 zum Stehen zu bringen.

In diesem Ausführungsbeispiel handelt es sich bei dem Fahrzeug 1 um einen Personenkraftwagen mit vier Fahrzeugreifen 7. Dabei weist jeder dieser Fahrzeugreifen 7 eine entsprechende Bremsanlage 6 auf. Mithilfe der Steuereinrichtung 15 kann innerhalb des Bremskreises 5 ein entsprechender Bremsdruck erzeugt und bereitgestellt werden.

Mithilfe der Steuereinrichtung 15 kann zumindest ein Steuerventil 16 (in dem Ausführungsbeispiel jeweils eine pro Bremsanlage) angesteuert werden. Dies wird mithilfe der Notfall-Spannung 14 erreicht. Mithilfe des Steuerventils 16 kann der Bremsdruck in der zumindest einen Bremsanlage 6 oder in allen Bremsanlagen 6 aufgebaut oder gehalten oder eingesperrt werden. Je nach Modell der Bremsanlage 6 wird der Bremsdruck so eingestellt beziehungsweise angepasst, dass ein effizienter Bremsvorgang durchgeführt werden kann. Bei dem Steuerventil 16 kann es sich beispielsweise um ein Ventil, ein Einlass- und Auslassventil oder eine andere zum Bremsdruck erzeugende Einheit handeln.

Des Weiteren können mithilfe der Auswerteeinheit 12 vielfältigste Informationen abgerufen werden, welche beispielsweise von externen Informationsstellen oder von Fahrzeugsystemen bereitgestellt wurden. Diese können dazu verwenden werden, um einen Bremsvorgang unter Berücksichtigung der aktuellen Situation des Fahrzeuges 1 und insbesondere der Umgebung 17 des Fahrzeuges 1 Rechnung zu tragen. Somit kann erreicht werden, dass der jeweilig durchzuführende Bremsvorgang an die aktuelle Situation, insbesondere an die aktuelle Fahrsituation des Fahrzeuges 1, dynamisch angepasst wird. Dazu kann beispielsweise das Steuerventil 16 in Abhängigkeit von einem Fahrzeugzustand und/oder einer Fahrbahneigenschaft der Fahrspur 3 und/oder von einem Zustand der zumindest einen Bremsanlage 6 gesteuert beziehungsweise angesteuert werden. Somit kann beispielsweise eine additive Bremskraftr zum Durchführen des Bremsvorgangs bereitgestellt werden. Dies kann insbesondere auf intelligente Art und Weise durch das elektronische Fahrzeugsicherheitssystem 9 verwaltet werden.

Des Weiteren können für das elektronische Fahrzeugsicherheitssystem 9 verschiedene Informationen für die Erzeugung des Bremsdrucks berücksichtigt werden. Dazu können beispielsweise Informationen bezüglich des Zustands der Fahrspur 3, also der Fahrbahnoberfläche, berücksichtigt werden. Ebenso können Informationen bezüglich der Umgebung 17 des Fahrzeugs 1, welche durch ein Umfeldsensorsystem des Fahrzeugs 1 erfasst werden können, berücksichtigt werden. Des Weiteren können Informationen betreffend einer aktuellen oder vergangenen Fahrsituation des Fahrzeugs 1 berücksichtigt werden. All diese Informationen und noch weitere angegebene Situationen können durch die elektronische Auswerteeinheit 12 bearbeitet, gespeichert und bereitgestellt werden. In Abhängigkeit von diesen Informationen kann beispielsweise der automatische Bremsvorgang dynamisch, adaptiv und insbesondere in angepasster Weise erfolgen.

Damit das Fahrzeug 1 noch sicherer und insbesondere effizienter betrieben werden kann, insbesondere bei einem Bremsvorgang, kann die Notfall-Spannungsquelle 13 auch bei einem Normalfall beziehungsweise Normalbetrieb verwendet werden. Somit weist diese eine zusätzliche Funktionalität auf. Dies ist insbesondere dann von Vorteil, wenn beispielsweise ein Notbremsvorgang oder ein dringender Bremsvorgang durchzuführen ist. Dabei kann mithilfe der Notfall-Spannung 14 eine zusätzliche elektrische Energie dem Bremssystem 4 zur Verfügung gestellt werden, um das Fahrzeug effizienter verzögern beziehungsweise abbremsen zu können. Insbesondere kann in einem Normalbetrieb der Spannungsversorgung 8 des Fahrzeugs 1 das Bremssystem 4 in Abhängigkeit von einer Gefahrenstufe beziehungsweise Dringlichkeit beziehungsweise Priorität eines durchzuführenden Bremsvorgangs zusätzlich mit der Notfall-Spannungsquelle 13 unterstützt werden.

Eine weitere Möglichkeit, das Fahrzeug sicher abbremsen zu können, wird im Folgenden erläutert. Beispielsweise kann vorkommen, dass noch zumindest teilweise Restströme und/oder Restspannungen im Fahrzeug 1 vorhanden sind, obwohl die Spannungsversorgung 8 ausgefallen oder defekt ist. Diese sind im Normalfall nicht brauchbar. Hierfür kann des Weiteren vorgesehen sein, dass eine elektrische Schaltung des elektronischen Fahrzeugsicherheitssystems 9 im Fahrzeug 1 integriert wird, welche auch bei geringen Spannungsbereichen zwischen 3 und 16 Volt mit einer minimalen Stromabnahme funktionsfähig sind. Dies könnte dem Bremssystem 4 bereitgestellt werden, um einen Bremsvorgang durchzuführen.

Eine weitere Möglichkeit zum Durchführen eines Bremsvorgangs auch bei Ausfall der Spannungsversorgung 8 ist der, dass zum Beispiel ein Elektromotor beziehungsweise eine elektrische Maschine des Fahrzeugs 1 in einem Kurzschlussbetrieb betrieben wird, sodass das Fahrzeug 1 verzögert werden kann.

Eine weitere Möglichkeit für die Durchführung eines Bremsvorgangs des Fahrzeugs 1 ist die, dass einzelne Räder oder die Räder der Fahrzeugdiagonalen oder die Räder der Vorderachse durch einen entsprechenden Mechanismus überbremst werden, um so das Fahrzeug 1 in den Stillstand zu versetzen. Dabei ergibt sich der Vorteil, dass eine verbesserte Reibwertausnutzung der betroffenen Räder erzielt werden kann, was eine Folge einer größeren Verzögerung ist.

### Bezugszeichenliste

- 1: Fahrzeug
- 2: Fortbewegungsfahrt
- 3: Fahrspur
- 4: Bremssystem
- 5: Bremskreis
- 6: Bremsanlage
- 7: Fahrzeugreifen
- 8: Spannungsversorgung
- 9: elektronisches Fahrzeugsicherheitssystem
- 10: Spannungswert
- 11: Überwachungseinheit
- 12: elektronische Auswerteeinheit
- 13: Notfall-Spannungsquelle
- 14: Notfall-Spannung
- 15: Steuereinrichtung
- 16: Steuerventil
- 17: Umgebung
- 18: Betätigungselement

## Patentansprüche

1. Verfahren zum automatischen Durchführen eines Bremsvorgangs eines Fahrzeugs (1) bei einem Fehlerfall einer Spannungsversorgung (8) des Fahrzeugs (1), wobei
- ein Spannungswert (10) der Spannungsversorgung (8) des Fahrzeugs (1) mittels einer Überwachungseinheit (11) des Fahrzeugs (1) überprüft wird,
- zumindest ein Fehlerfall der Spannungsversorgung (8) mittels der Überwachungseinheit (11) festgestellt wird, indem der Spannungswert (10) der Spannungsversorgung (8) mit einem vorgegebenen Schwellwert verglichen wird, wobei
- dann, wenn der Fehlerfall festgestellt wird, eine Notfall-Spannung (14) mittels einer zu der Spannungsversorgung (8) des Fahrzeugs (1) verschiedenen Notfall-Spannungsquelle (13) einem Bremssystem (4) zum Durchführen des Bremsvorgangs bereitgestellt wird, und
- ein Steuereinrichtung (15) zumindest einer Bremsanlage (6) des Bremssystems (4) in Abhängigkeit von der Notfall-Spannung (14) betrieben wird, wobei
- durch die betriebene Steuereinrichtung (15) ein Bremsdruck in der zumindest einen Bremsanlage (6) erzeugt wird, wodurch der Bremsvorgangs des Fahrzeugs (1) automatisch durchgeführt wird,
**dadurch gekennzeichnet, dass**
der zumindest eine Fehlerfall dann vorliegt, wenn der Spannungswert (10) der Spannungsversorgung (8) kleiner als der vorgegebene Schwellwert ist, wobei zusätzlich eine Zeitdauer, wie lange der Spannungswert (10) kleiner als der vorgegebene Schwellwert ist, ermittelt wird, wobei anhand der ermittelten Zeitdauer der Fehlerfall zu zumindest einer Fehlerfall-Kategorie von zumindest zwei verschiedenen Fehlerfall-Kategorien zugeordnet wird.

2. Verfahren nach Anspruch 1,
**dadurch gekennzeichnet, dass**
mit der betriebenen Steuereinrichtung (15) ein Steuerventil (16) der zumindest einen Bremsanlage (6) gesteuert wird, wobei mit dem angesteuerten Steuerventil (16) der Bremsdruck in der zumindest einen Bremsanlage (6) aufgebaut wird.

3. Verfahren nach Anspruch 2,
**dadurch gekennzeichnet, dass**
das Steuerventil (16) in Abhängigkeit von einem Fahrzeugzustand und/oder einer Fahrbahneigenschaft und/oder einem Zustand der zumindest einen Bremsanlage (6) gesteuert wird, insbesondere das Steuerventil (16) derart gesteuert wird, dass eine additive Bremskraft zum Durchführen des Bremsvorgangs bereitgestellt werden kann.

4. Verfahren nach einem der vorhergehenden Ansprüche,
**dadurch gekennzeichnet, dass**
eine erste Fehlerfall-Kategorie der zumindest zwei verschiedenen Fehlerfall-Kategorien mit einem ersten Zeitintervall, welches mit der ermitteln Zeitdauer verglichen werden kann, charakterisiert wird, wobei in der ersten Fehlerfall-Kategorie des Fehlerfalls die Notfall-Spannungsquelle (13) in einen Bereitschaft-Modus versetzt wird, und eine zweite Fehlerfall-Kategorie der zumindest zwei verschiedenen Fehlerfall-Kategorien mit einem zweiten Zeitintervall, welches mit der ermitteln Zeitdauer verglichen werden kann, charakterisiert wird, wobei in der zweiten Fehlerfall-Kategorie des Fehlerfalls die Notfall-Spannungsquelle (13) die Steuereinrichtung (15) automatisch mit der Notfall-Spannung (14) elektrisch versorgt wird.

5. Verfahren nach einem der vorhergehenden Ansprüche,
**dadurch gekennzeichnet, dass**
in einem Normalbetrieb der Spannungsversorgung (8) des Fahrzeugs (1) das Bremssystem (4) in Abhängigkeit von einer Gefahrenstufe eines durchzuführenden Bremsvorgangs zusätzlich mit der Notfall-Spannungsquelle (13) unterstütz wird, um den durchzuführenden Bremsvorgang durchzuführen.

6. Verfahren nach einem der vorhergehenden Ansprüche,
**dadurch gekennzeichnet, dass**
durch den erzeugten Bremsdruck eine Notbremsung als Bremsvorgang durchgeführt wird, sodass das Fahrzeug (1) zum Stillstand gebracht wird, insbesondere der Zustand des erreichten Stillstands des Fahrzeugs (1) für eine vorgegebene Zeitdauer beibehalten wird.

7. Verfahren nach einem der vorhergehenden Ansprüche,
**dadurch gekennzeichnet, dass**
eine Information betreffend eines Zustands einer Fahrspur (3), auf welcher sich das Fahrzeug (1) befindet, und/oder eine Information betreffend einer Umgebung (17) des Fahrzeugs (1), und/oder eine Information betreffend einer aktuellen und/oder vergangenen Fahrsituation des Fahrzeugs (1) einer elektronischen Auswerteeinheit (12) der Überwachungseinheit (11) bereitgestellt wird, wobei in Abhängigkeit von zumindest einer dieser bereitgestellten Informationen die Erzeugung des Bremsdrucks angepasst wird, insbesondere anhand von zumindest einer dieser bereitgestellten Informationen ein Zeitpunkt der Erzeugung des Bremsdrucks und/oder eine Höhe des Bremsdrucks bestimmt wird.

8. Elektronisches Fahrzeugsicherheitssystem (9) mit einer Überwachungseinheit (11) und zumindest einer Notfall-Spannungsquelle (13), wobei das elektronische Fahrzeugsicherheitssystem (9) zum Durchführen eines Verfahrens nach einem der vorhergehenden Ansprüche ausgebildet ist.

9. Fahrzeug (1) mit einem elektronischen Fahrzeugsicherheitssystem (9) nach Anspruch 8.

## Claims

1. Method for automatically carrying out a braking process of a vehicle (1) in the event of a fault in a voltage supply (8) of the vehicle (1),
- a voltage value (10) of the voltage supply (8) of the vehicle (1) being checked by means of a monitoring unit (11) of the vehicle (1),
- at least one fault in the voltage supply (8) being detected by means of the monitoring unit (11) by way of the voltage value (10) of the voltage supply (8) being compared with a specified threshold value,
- then an emergency voltage (14) being provided to a braking system (4) for carrying out the braking process by means of an emergency voltage source (13) different from the voltage supply (8) of the vehicle (1) when the fault is detected, and
- a control device (15) of at least one braking installation (6) of the braking system (4) being operated on the basis of the emergency voltage (14),
- a braking pressure being generated in the at least one braking installation (6) by means of the operated control device (15), as a result of which the braking process of the vehicle (1) is automatically carried out,
**characterized in that**
the at least one fault exists when the voltage value (10) of the voltage supply (8) is less than the specified threshold value, a time period for which the voltage value (10) is less than the specified threshold value additionally being determined, the fault being assigned to at least one fault category of at least two different fault categories using the determined time period.

2. Method according to claim 1,
**characterized in that**
a control valve (16) of the at least one braking installation (6) is controlled using the operated control device (15), the braking pressure in the at least one braking installation (6) being built up using the activated control valve (16).

3. Method according to claim 2,
**characterized in that**
the control valve (16) is controlled on the basis of a vehicle condition and/or a road surface property and/or a condition of the at least one braking installation (6), in particular the control valve (16) is controlled such that an additive braking force can be provided to carry out the braking process.

4. Method according to any of the preceding claims,
**characterized in that**
a first fault category of the at least two different fault categories is **characterized by** a first time interval, which can be compared with the determined time period, the emergency voltage source (13) being put into a standby mode in the first fault category of the fault, and a second fault category of the at least two different fault categories is **characterized by** a second time interval, which can be compared with the determined time period, the emergency voltage source (13) the control device (15) being electrically supplied automatically with the emergency voltage (14) in the second fault category of the fault.

5. Method according to any of the preceding claims,
**characterized in that**
in normal operation of the voltage supply (8) of the vehicle (1), the braking system (4) is additionally supported by the emergency voltage source (13) on the basis of a hazard level of a braking process to be carried out, in order to carry out the braking process to be carried out.

6. Method according to any of the preceding claims,
**characterized in that**
an emergency braking maneuver is carried out as the braking process by the generated braking pressure so that the vehicle (1) is brought to a standstill, in particular the reached condition of the vehicle (1) at a standstill is maintained for a specified time period.

7. Method according to any of the preceding claims,
**characterized in that**
information concerning the condition of a lane (3) on which the vehicle (1) is located, and/or information concerning the environment (17) of the vehicle (1), and/or information concerning a current and/or past driving situation of the vehicle (1) is provided to an electronic evaluation unit (12) of the monitoring unit (11), the generation of the braking pressure being adjusted on the basis of at least one of these provided pieces of information, in particular a time of the generation of the braking pressure and/or a level of the braking pressure being ascertained using at least one of these provided pieces of information.

8. Electronic vehicle safety system (9) having a monitoring unit (11) and at least one emergency voltage source (13), wherein the electronic vehicle safety system (9) is configured to carry out a method according to any of the preceding claims.

9. Vehicle (1) having an electronic vehicle safety system (9) according to claim 8.

## Revendications

1. Procédé permettant la réalisation automatique d'un processus de freinage d'un véhicule (1) en cas de défaut d'une alimentation en tension (8) du véhicule (1), dans lequel
- une valeur de tension (10) de l'alimentation en tension (8) du véhicule (1) est vérifiée par le biais d'une unité de surveillance (11) du véhicule (1),
- au moins un défaut de l'alimentation en tension (8) est constaté par le biais de l'unité de surveillance (11), en comparant la valeur de tension (10) de l'alimentation en tension (8) à une valeur seuil prédéfinie, dans lequel
- lorsque le défaut est constaté, une tension d'urgence (14) est fournie à un système de freinage (4) par le biais d'une source de tension d'urgence (13) différente de l'alimentation en tension (8) du véhicule (1) pour la réalisation du processus de freinage, et
- un dispositif de commande (15) d'au moins une installation de freinage (6) du système de freinage (4) est actionné en fonction de la tension d'urgence (14), dans lequel
- une pression de freinage est générée dans l'au moins une installation de freinage (6) par le dispositif de commande (15) actionné, moyennant quoi le processus de freinage du véhicule (1) est réalisé automatiquement,
**caractérisé en ce que**
l'au moins un défaut est présent lorsque la valeur de tension (10) de l'alimentation en tension (8) est inférieure à la valeur seuil prédéfinie, dans lequel en outre une durée pendant laquelle la valeur de tension (10) est inférieure à la valeur seuil prédéfinie est déterminée, dans lequel le défaut est affecté à au moins une catégorie de défauts parmi au moins deux catégories de défauts différentes à l'aide de la durée déterminée.

2. Procédé selon la revendication 1,
**caractérisé en ce que**
une soupape de commande (16) de l'au moins une installation de freinage (6) est commandée avec le dispositif de commande (15) actionné, dans lequel la pression de freinage est établie dans l'au moins une installation de freinage (6) avec la soupape de commande (16) commandée.

3. Procédé selon la revendication 2,
**caractérisé en ce que**
la soupape de commande (16) est commandée en fonction d'un état de véhicule et/ou d'une propriété de chaussée et/ou d'un état de l'au moins une installation de freinage (6), en particulier la soupape de commande (16) est commandée de telle sorte qu'une force de freinage additive peut être fournie pour la réalisation du processus de freinage.

4. Procédé selon l'une des revendications précédentes,
**caractérisé en ce que**
une première catégorie de défauts des au moins deux catégories de défauts différentes est **caractérisée par** un premier intervalle de temps qui peut être comparé à la durée déterminée, dans lequel, dans la première catégorie de défauts du défaut, la source de tension d'urgence (13) est placée dans un mode d'attente, et une seconde catégorie de défauts des au moins deux catégories de défauts différentes est **caractérisée par** un second intervalle de temps qui peut être comparé à la durée déterminée, dans lequel la source de tension d'urgence (13) alimente électriquement automatiquement le dispositif de commande (15) avec la tension d'urgence (14) dans la seconde catégorie de défauts du défaut.

5. Procédé selon l'une des revendications précédentes,
**caractérisé en ce que**
dans un fonctionnement normal de l'alimentation en tension (8) du véhicule (1), le système de freinage (4) est en outre assisté par la source de tension d'urgence (13) en fonction d'un niveau de danger d'un processus de freinage à réaliser, afin de réaliser le processus de freinage à réaliser.

6. Procédé selon l'une des revendications précédentes,
**caractérisé en ce que**
un freinage d'urgence est réalisé en tant que processus de freinage par la pression de freinage générée, de sorte que le véhicule (1) est amené à l'arrêt, en particulier l'état d'arrêt atteint du véhicule (1) est maintenu pendant une durée prédéfinie.

7. Procédé selon l'une des revendications précédentes,
**caractérisé en ce que**
une information concernant un état d'une voie de circulation (3) sur laquelle se trouve le véhicule (1), et/ou une information concernant un environnement (17) du véhicule (1), et/ou une information concernant une situation de conduite actuelle et/ou passée du véhicule (1) est fournie à une unité d'évaluation électronique (12) de l'unité de surveillance (11), dans lequel la génération de la pression de freinage est adaptée en fonction d'au moins une de ces informations fournies, en particulier un moment de la génération de la pression de freinage et/ou une hauteur de la pression de freinage sont établis à l'aide d'au moins une de ces informations fournies.

8. Système de sécurité de véhicule électronique (9) comportant une unité de surveillance (11) et au moins une source de tension d'urgence (13), dans lequel le système de sécurité de véhicule électronique (9) est conçu pour la réalisation d'un procédé selon l'une des revendications précédentes.

9. Véhicule (1) comportant un système de sécurité de véhicule électronique (9) selon la revendication 8.
